# EUROPEAN PATENT APPLICATION

(11) **EP 4 512 557 A1**
(43) Date of publication of application: **26.02.2025**
(21) Application number: 24178142.6
(22) Date of filing: 27.05.2024
(51) Int. Cl.: B23C 5/10

(54) **BALL END MILL**

(30) Priority: 25.08.2023 JP 2023137629
(71) Applicant: UNION TOOL CO., Tokyo (JP)
(72) Inventor: YOSHIHARA, Shota, Tokyo (JP); NAKAMURA, Munehiro, Tokyo (JP)
(74) Representative: Kramer Barske Schmidtchen Patentanwälte PartG mbB

(57) **Abstract**

An object of the present invention is to provide a ball end mill suitable for finishing, with which a high-gloss machined surface is obtained in the cutting of a flat surface orthogonal to a tool rotation axis, such as a bottom surface of a die, using a tool tip portion, and with which it is possible to omit a polishing step or reduce the number of polishing man-hours. The present invention is a ball end mill in which a plurality of swarf discharge grooves 2 opened at a tip end and leading from a tool-tip-end side to a tool-base-end side are formed in an outer periphery of a tool body 1, and ball blades 5 are provided at intersection ridgelines between rake faces 3 of the swarf discharge grooves 2 and tip-end flanks 4 of the tool body 1, wherein a convex tip surface 6 intersecting a tool rotation axis a of the tool body 1 is provided at a tool tip portion, and intersection ridgelines between the tip surface 6 and the rake faces 3 are configured as central cutting blades 7 continuous with the ball blades 5.

## Description

### TECHNICAL FIELD

The present invention relates to a ball end mill.

### BACKGROUND ART

Ball end mills are widely used in the fields of die machining and component machining. A ball end mill is provided with an arc-shaped ball blade having a hemispherical locus of rotation at the tip of the tool, and using a ball end mill, it is possible to obtain a favorable machined surface by cutting a curved surface having a complicated shape or a draft surface (inclined flat surface) of a die by using a ball blade of which the rake angle and clearance angle are appropriately designed.

However, there has been a problem in that the tip portion of a ball end mill (the top of the arc-shaped ball blade and the vicinity thereof) has poorer cutting performance than the outer peripheral portion of the ball blade, and it is difficult to obtain a favorable machined surface in the machining of a flat surface orthogonal to a tool rotation axis, such as the bottom surface of a die.

In view of this, finishing ball end mills such as that disclosed in Patent Document 1 have heretofore been proposed, such ball end mills having the purpose of obtaining a favorable glossy machined surface even in the machining of a flat surface orthogonal to a tool rotation axis, such as the bottom surface of a die.

### [Prior Art Documents]

### [Patent Document]

[Patent Document 1] Japanese Laid-open Patent Application No. 2000-233311

### SUMMARY OF THE INVENTION

### PROBLEMS THE INVENTION IS INTENDED TO SOLVE

In the ball end mill of Patent Document 1, two ball blades are arranged in center-rising positions, either a chisel angle of a chisel edge constituted of flanks of the two ball blades is set to 155 degrees or more or a ratio of spaces between rake face inner edges of the two blades formed as gashes in the ball blades to chisel edge length is 1/7-1/3, and a flat surface orthogonal to a tool rotation axis, such as a bottom surface of a die, is cut by a cutting action performed by the chisel edge.

However, ball end mills having a chisel edge have been widely used for a long time, and the chisel edge is an intersection ridgeline where the flanks of the ball blades intersect at a large obtuse angle; therefore, the rake angle is a large negative rake angle and gouging is caused in the machined surface. Therefore, even if the angle (chisel angle) and length at which the chisel edge is placed are adjusted to appropriate values as disclosed in Patent Document 1, it is difficult to obtain a machined surface (flat surface) having such high gloss that a polishing step (finishing treatment) can be omitted; therefore, at present, a polishing step (finishing treatment) must be performed after cutting.

The present invention was devised in view of the current state discussed above, it being an object of the invention to provide a ball end mill suitable for finishing, with which it is possible to obtain a high-gloss machined surface and to omit a polishing step or reduce the number of polishing man-hours in the cutting of a flat surface orthogonal to a tool rotation axis, such as a bottom surface of a die, using a tool tip portion.

### DISCLOSURE OF THE INVENTION

The main points of the present invention are described below with reference to the accompanying drawings.

In a first aspect, the present invention relates to a ball end mill in which a plurality of swarf discharge grooves 2 opened at a tip end and leading from a tool-tip-end side to a tool-base-end side are formed in an outer periphery of a tool body 1, and ball blades 5 are provided at intersection ridgelines between rake faces 3 of the swarf discharge grooves 2 and tip-end flanks 4 of the tool body 1, the ball end mill being characterized in that a convex tip surface 6 intersecting a tool rotation axis a of the tool body 1 is provided at a tool tip portion, and intersection ridgelines between the tip surface 6 and the rake faces 3 are configured as central cutting blades 7 continuous with the ball blades 5.

In a second aspect, the present invention also relates to the ball end mill according to aspect 1, characterized in that the tip surface 6 is provided so as to be continuous with the tip-end flanks 4 of the pair of ball blades 5, which are provided in 180 degree rotational symmetry with respect to the tool rotation axis a, and the rake faces 3 of the tip-end flanks 4, between the tip-end flanks 4.

In a third aspect, the present invention also relates to the ball end mill according to aspect 2, characterized in that the tip surface 6 includes the tool rotation axis *a,* and in a tool tip view, the tip surface 6 is configured so as to have a peaked profile that linearly connects an arbitrary point on one central cutting blade 7 continuous with one of the ball blades 5 passing through the vicinity of the tool rotation axis *a*, and an arbitrary point on the other central cutting blade 7 continuous with the other ball blade 5.

In a fourth aspect, the present invention also relates to the ball end mill according to aspect 3, characterized in that: the tip surface 6 includes the tool rotation axis *a;* in a tool tip view, the tip surface 6 is configured so as to have a peaked profile that linearly connects an intersection point between one central cutting blade 7 continuous with one of the ball blades 5 and one ridgeline 10 formed of the tip surface 6 and one tip-end flank 4, and an intersection point between the other central cutting blade 7 continuous with the other ball blade 5 and the other ridgeline 10 formed of the tip surface 6 and the other tip-end flank 4; and the maximum height of the peaked shape is 6 *µ*m or less.

In a fifth aspect, the present invention also relates to the ball end mill according to any one of aspects 1-4, characterized in that the central cutting blades 7 are provided up to the vicinity of the tool rotation axis *a.*

In a sixth aspect, the present invention also relates to the ball end mill according to any one of aspects 1-5, characterized in that the tip surface 6 is continuous with the tip-end flanks 4, and the tip surface 6 is provided such that in a tool tip view, intersection points P2 described in (2) below are either located on negative sides or located on positive sides where a separation distance X in a direction between intersection points P1 described in (1) below and intersection points P2 along the central cutting blades 7 is 0-10% (inclusive) of a tool outer diameter, the positive sides being the ball-blade 5 sides with which the central cutting blades 7 are continuous and the negative sides being the sides opposite thereto, with respect to a normal 9 to the central cutting blades 7 passing through the tool rotation axis a or to extensions 8 of the central cutting blades 7.
(1) Intersection points P1: in a tool tip view, intersection points between central cutting blades 7 or extensions 8 of the central cutting blades 7, and a normal 9 to the central cutting blades 7 passing through the tool rotation axis a or to the extensions 8 of the central cutting blades 7
(2) Intersection points P2: in a tool tip view, intersection points between ridgelines 10 on the sides further from the ball blades 5 among ridgelines 10 formed of the tip surface 6 and the tip-end flanks 4, and the edges of the tip ends of the swarf discharge grooves 2 having the ball blades 5 and the central cutting blades 7 continuous with the ball blades 5

In a seventh aspect, the present invention also relates to the ball end mill according to any one of aspects 1-6, characterized in that in a tool tip view of the tip surface 6, a width W of the tip surface 6 is 0.005 mm ≤ W ≤ 0.2D (D: tool outer diameter), the width W of the tip surface 6 being a space between two ridgelines 10 formed of the tip surface 6 and the tip-end flanks 4 of the pair of ball blades 5 provided in 180 degree rotational symmetry with respect to the tool rotation axis *a.*

In an eighth aspect, the present invention also relates to the ball end mill according to aspect 7, characterized in that the width W of the tip surface 6 is set to the following ranges.
0.01 mm ≤ W ≤ 0.3 mm when tool outer diameter D > 1.5 mm
0.01 mm ≤ W ≤ 0.2D (D: tool outer diameter) when tool outer diameter D ≤ 1.5 mm

### EFFECT OF THE INVENTION

Due to being configured as described above, the present invention is a ball end mill suitable for finishing, with which it is possible to obtain a high-gloss machined surface and to omit a polishing step or reduce the number of polishing man-hours in the cutting of a flat surface orthogonal to a tool rotation axis, such as a bottom surface of a die, using a tool tip portion.

### BRIEF DESCRIPTION OF THE DRAWINGS

FIG. 1 is an explanatory plan view of the main part of the present embodiment in a tool tip view;
FIG. 2 includes (a) an explanatory left side view and (b) an explanatory front view of the main part of the present embodiment;
FIG. 3 is an explanatory plan diagram showing the main parts of another example 1 of the present embodiment in a tool-tip view;
FIG. 4 includes (a) an explanatory left side view and (b) an explanatory front view of the main part of another example 1 of the present embodiment;
FIG. 5 is an explanatory plan diagram showing the main parts of another example 2 of the present embodiment in a tool-tip view;
FIG. 6 includes (a) an explanatory left side view and (b) an explanatory front view of the main part of another example 2 of the present embodiment;
FIG. 7 is an explanatory drawing defining a convex outer shape (profile) of a tip surface of the present embodiment;
FIG. 8 is an explanatory drawing defining convexity of the convex outer shape (profile) of the tip surface of the present embodiment;
FIG. 9 is a profile data example of the convex outer shape (profile) of the tip surface of the present embodiment;
FIG. 10 is an explanatory drawing in a tool tip view of the positive sides, negative sides, separation distance X, and width W of the tip surface in the present embodiment;
FIG. 11 includes tool-tip-view images for instances when the intersection points P2 are located on the positive sides and the negative sides in the present embodiment;
FIG. 12 includes an explanatory plan view and an explanatory front view of a configuration example of the tip surface of the present embodiment;
FIG. 13 is a photograph of an example of the results of evaluating glossiness in Test Example 1;
FIG. 14 is a graph of the results of evaluating surface roughness (results of measuring arithmetic mean roughness Ra) in Test Example 1;
FIG. 15 includes photographs of the results of observing machined surfaces in Test Example 1;
FIG. 16 is a photograph of the results of evaluating glossiness of 0° surfaces obtained with the present embodiment and the prior art in Test Example 4;
FIG. 17 is a graph of the results of evaluating surface roughness (results of measuring arithmetic mean roughness Ra) of a 0° surface at machining times of 20 minutes and 60 minutes with both the present embodiment and the prior art in Test Example 4; and
FIG. 18 is a graph of the results of evaluating surface roughness (results of measuring arithmetic mean roughness Ra) of a 0° surface and a 45° surface at a machining time of 20 minutes with both the present embodiment and the prior art in Test Example 4.

### BEST MODE FOR CARRYING OUT THE INVENTION

The preferred embodiments of the present invention shall be described briefly on the basis of the drawings, to show the operation of the present invention.

In the present invention, a convex tip surface 6 intersecting a tool rotation axis a of a tool body 1 is provided at a tool tip portion. Therefore, there is no chisel edge having a large negative rake angle, and gouging due to the influence of the chisel edge is prevented as much as possible.

In addition, in the present invention, intersection ridgelines between the tip surface 6 and rake faces 3 are configured as central cutting blades 7 continuous with ball blades 5. Therefore, the central cutting blades 7 have the same rake angle as the ball blades 5 and exhibit the same high cutting performance as the ball blades 5.

Moreover, in the present invention, because the tip surface 6 is formed into a convex shape, in the machining of a flat surface orthogonal to the tool rotation axis a, even if the perpendicularity of the tool rotation axis a to the flat surface deviates (for example, even if the tool bends due to cutting resistance and the tool rotation axis a becomes somewhat inclined relative to the flat surface), the tip surface 6 comes into contact with the flat surface and a burnishing effect due to the sliding contact action of the tip surface 6 on the cutting surface is achieved.

Thus, in the present invention, in the machining of a flat surface orthogonal to or intersecting the tool rotation axis a, because of the high cutting performance of the central cutting blades 7 and the burnishing effect due to the sliding contact action of the tip surface 6 on the cutting surface, cutting marks made during cutting by the central cutting blades 7 are minimized, and it is possible to obtain a machined surface having excellent glossiness equivalent to or better than that obtained by cutting with the ball blades 5.

### EXAMPLES

Specific examples of the present invention shall be described with reference to the drawings.

The present embodiment is a ball end mill in which a plurality of swarf discharge grooves 2 opening at the tip and leading from a tool-tip-end side to a tool-base-end side are formed in the outer periphery of the tool body 1, and ball blades 5 are provided at intersection ridgelines between rake faces 3 of the swarf discharge grooves 2 and tip-end flanks 4 of the tool body 1, wherein a tool tip portion is provided with a convex tip surface 6 that intersects the tool rotation axis a of the tool body 1 and that assumes a convex form toward the tip end side in the direction of the tool rotation axis a, and the intersection ridgelines between the tip surface 6 and the rake faces 3 are configured as central cutting blades 7 continuous with the ball blades 5.

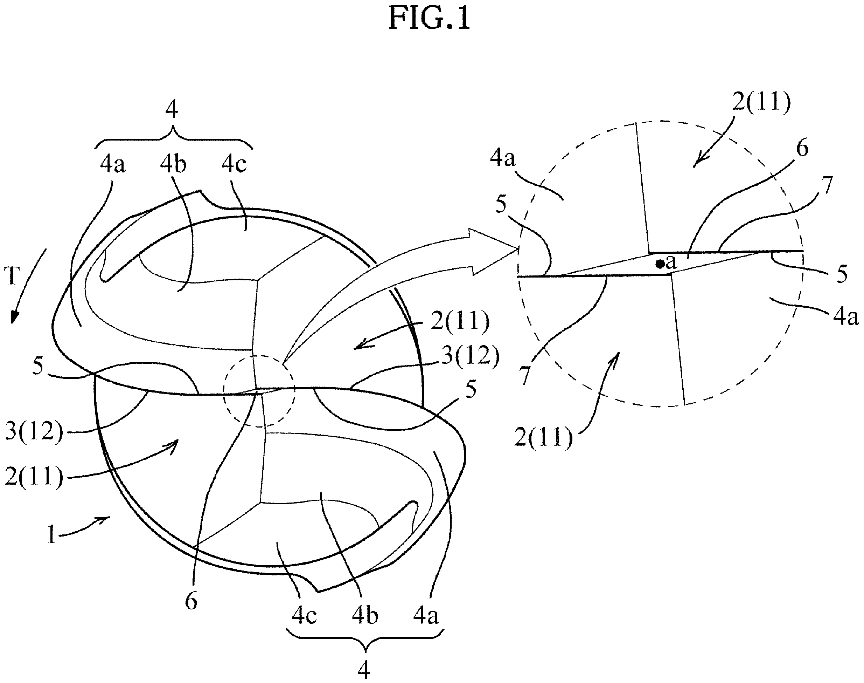

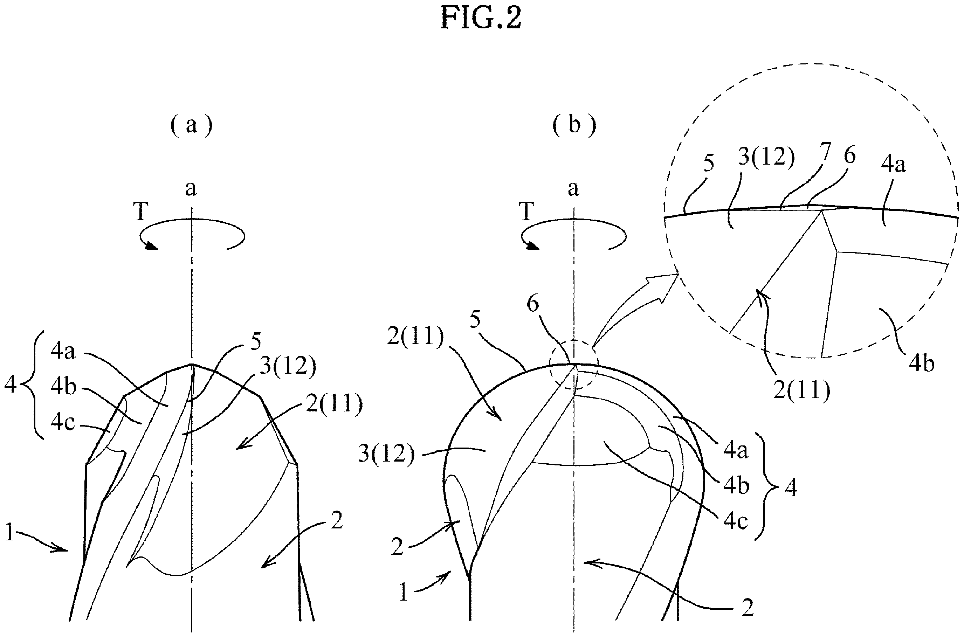

Specifically, the present embodiment is a case in which the ball end mill of the present invention is configured as a two-bladed ball end mill (a ball end mill having a pair of ball blades 5) in which two helical swarf discharge grooves 2 are provided, and ball blades 5 are provided at intersection ridgelines between tip-end flanks 4 of a tool body 1 and two rake faces 3 formed at the tip ends of the swarf discharge grooves 2, as shown in FIGS. 1 and 2.

The present embodiment is not limited to the configuration of the two-bladed ball end mill described above; ball blades other than the two (pair of) ball blades 5 may be provided to form a multi-bladed ball end mill having three or more ball blades. In the drawings, an arrow with the symbol T indicates a tool rotation direction.

More specifically, in the present embodiment, gashes 11, which are parts of the swarf discharge grooves 2, are formed at the tip end parts of the rake faces 3 (wall surfaces that face forward in a tool rotation direction) of the swarf discharge grooves 2 to provide gash faces 12 that face forward in the tool rotation direction, and the gash faces 12 serve as the rake faces 3 in the tool tip.

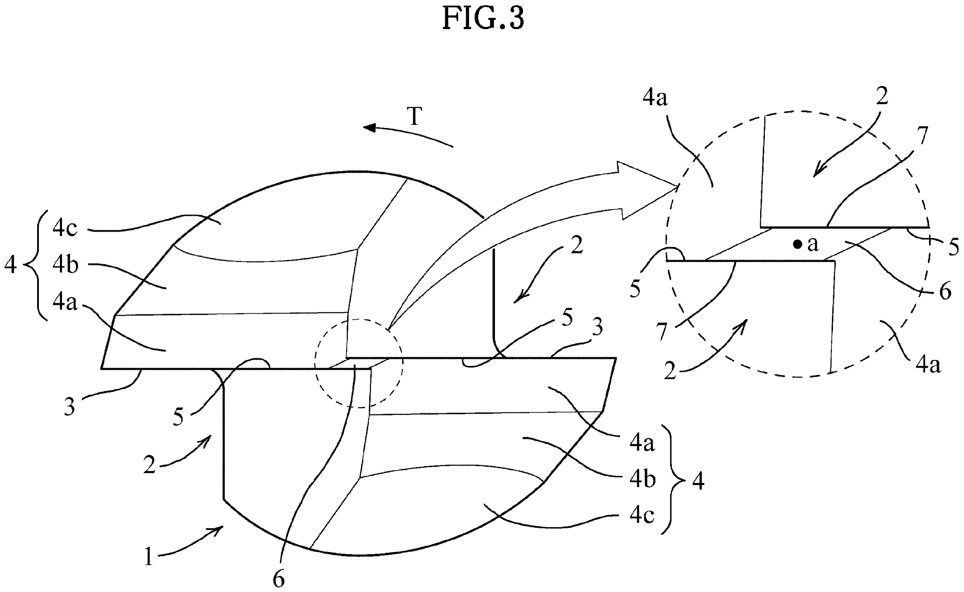

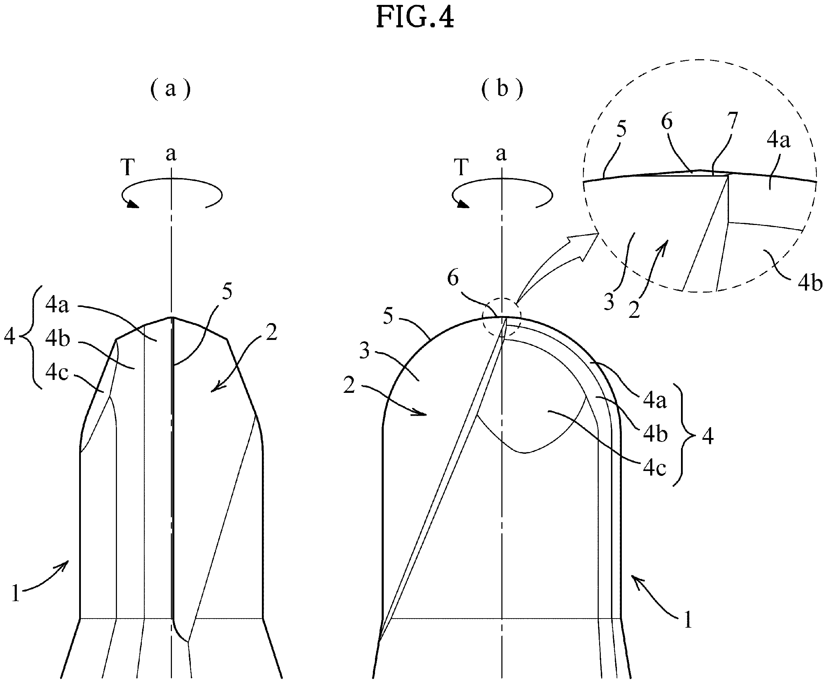

Instead of this configuration, the present embodiment may also be configured as, for example, a "straight-blade" ball end mill in which linear swarf discharge grooves 2 are provided, gashes 11 are not provided, i.e., gash faces 12 are not provided, and wall surfaces that face forward in the tool rotation direction of the swarf discharge grooves 2 are configured as rake faces 3 in the tool tip, as is the case in another example 1 shown in FIGS. 3 and 4.

In addition, the present embodiment is configured into a "center-rising" shape in which in a tool tip view, the central cutting blades 7 near the tool rotation axis a are placed forward in the tool rotation direction in relation to the tool rotation axis *a.*

Specifically, the present embodiment is configured into a center-rising shape in which in a tool tip view, swarf discharge grooves 2 (gashes 11) opening at the tip ends are provided outside the tool rotation axis *a* so as to leave a core around the tool rotation axis a from the outer peripheral side of the tool, and the central cutting blades 7 are provided near the tool rotation axis a at the edges of the tip ends of the swarf discharge grooves 2 (gashes 11).

The swarf discharge grooves 2 (gashes 11) constituting this center-rising shape may be provided so as to extend past the tool rotation axis *a* or not extend past the tool rotation axis a from the outer peripheral side of the tool in a tool tip view.

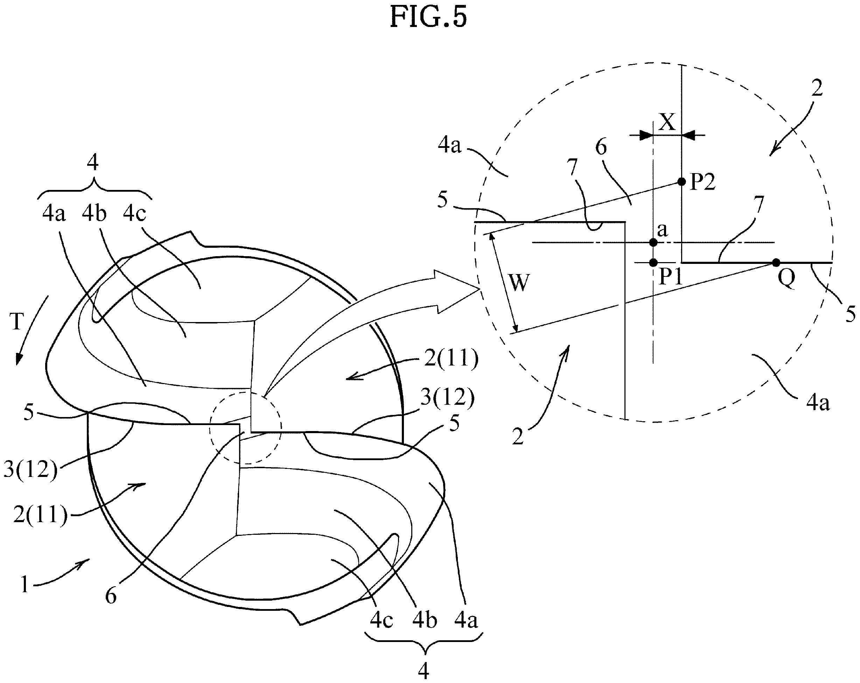

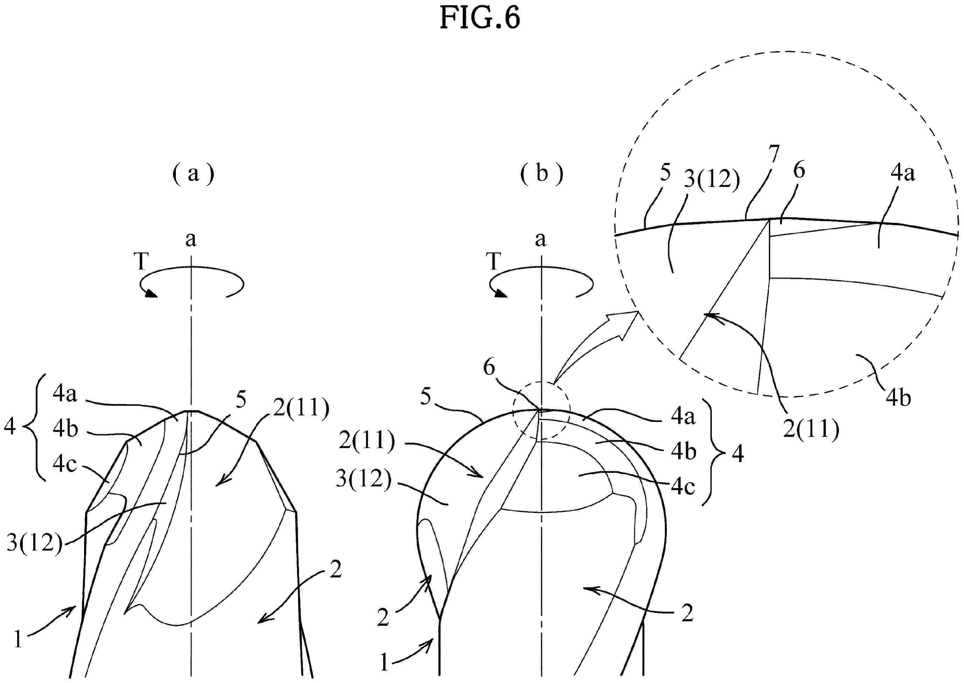

In addition, the present embodiment is not limited to the configuration previously described, i.e., the configuration of the center-rising shape shown in FIGS. 1-4. For example, the present embodiment may be configured into a "center-falling" shape in which the central cutting blades 7 near the tool rotation axis a are arranged rearward in the tool rotation direction in relation to the tool rotation axis a, in a tool tip view, as in the another example 2 shown in FIGS. 5 and 6.

The constituent parts of the present embodiment will be described in detail below.

The tip-end flanks 4 of the present embodiment are each constituted of a first flank 4a inclined at a predetermined angle relative to the tool rotation axis *a,* a second flank 4b provided on the rear side of the first flank 4a in the tool rotation direction and inclined at a different angle than the first flank 4a, and a third flank 4c provided on the rear side of the second flank 4b in the tool rotation direction and inclined at a different angle than the second flank 4b, as shown in FIGS. 1 and 2.

The two ball blades 5 (pair of ball blades 5) are provided at the intersection ridgelines between the first flanks 4a of the tip-end flanks 4 and the rake faces 3 (gash faces 12) facing forward in the tool rotation direction, and are provided in 180 degree rotational symmetry with respect to the tool rotation axis *a.*

The tip surface 6, as previously described, is provided in the tool tip portion and is configured into a convex surface that intersects the tool rotation axis a and that assumes a convex form toward the tip end side in the direction of the tool rotation axis *a.*

Specifically, the tip surface 6 is provided between the tip-end flanks 4 (first flanks 4a) of the ball blades 5 and is configured as a convex surface continuous with the tip-end flanks 4 (first flanks 4a) and the rake faces 3 of the ball blades 5, as shown in FIG. 1. Furthermore, the intersection ridgelines between the tip surface 6 and the rake faces 3 of the ball blades 5 are continuous with the ball blades 5, and the intersection ridgelines are configured so as to be central cutting blades 7 having the same rake angle as the ball blades 5.

In the present embodiment, the central cutting blades 7 are provided as a pair in 180 degree rotational symmetry with respect to the tool rotation axis *a.*

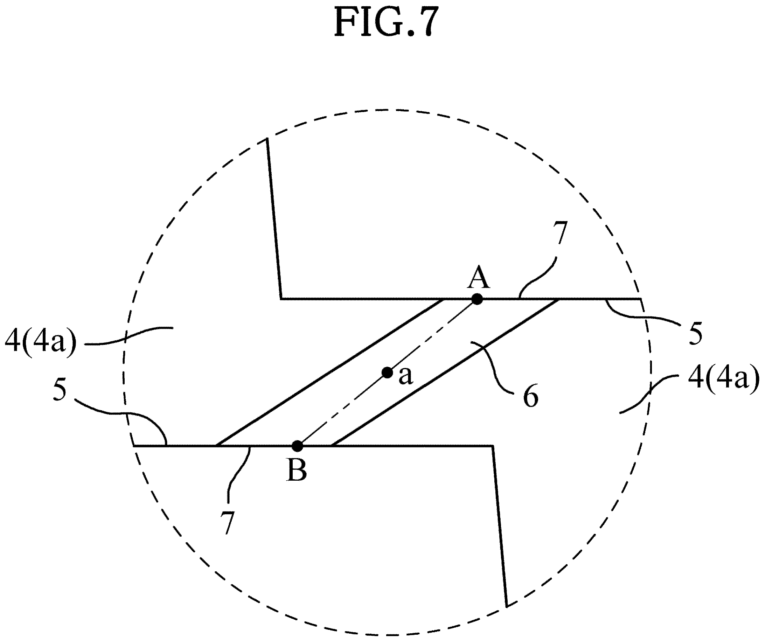

The tip surface 6 includes the tool rotation axis a in the same plane, and the tip surface 6 is configured into a convex surface that, in a tool tip view such as that shown in FIG. 7, has a peaked outer shape (profile) which extends in a straight line from an arbitrary point A on one central cutting blade 7 continuous with one ball blade 5 of the pair of ball blades 5, passes through the vicinity of the tool rotation axis a, and connects to an arbitrary point B on the other central cutting blade 7 continuous with the other ball blade 5.

Specifically, the tip surface 6 is configured such that the outer shape (profile) is a peak shape and the maximum height of the peak shape is 6 *µ*m or less.

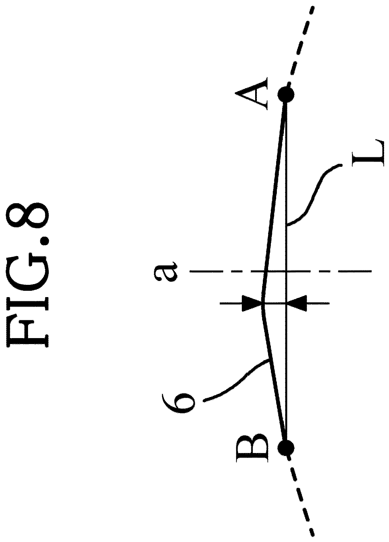

In the present embodiment, using a line segment L connecting the point A and the point B as a reference, such as is shown in FIG. 8, the difference between this line segment L and the top of the outer shape (profile) is the maximum height (convexity) of the peak shape.

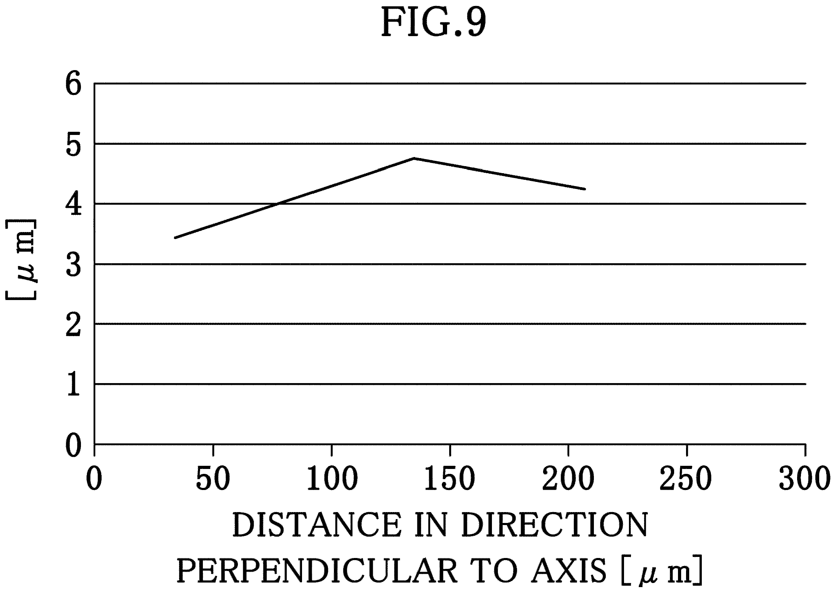

In the present embodiment, for the outer shape (profile) of the tip surface 6, profile data such as that shown in FIG. 9 is acquired by measurement using a laser microscope, and this profile data is used as the outer shape (profile) of the tip surface 6.

Specifically, the outer shape (profile) of the tip surface 6 such as is shown in FIG. 9 is, in a tool tip view, measured with a laser microscope in a direction that linearly connects the point A on one central cutting blade 7 and the point B on the other central cutting blade 7, and the difference in distance in the direction of the tool rotation axis a from any appropriate position is plotted as data, i.e., the outer shape (profile) of the tip surface 6 represents the shape of the tip surface 6 viewed from the lateral direction of the tool (the direction perpendicular to the tool rotation axis a).

As a result, the outer shape (profile) of the tip surface 6 has a peaked shape that assumes a convex form from the central cutting blade 7 side toward the tool center side (the tool rotation axis a side), and it can be confirmed that the tip surface 6 is a convex surface that assumes a convex form toward the tip side in the direction of the tool rotation axis *a.*

In the present embodiment, the tip surface 6 is configured such that the central cutting blades 7 are formed up to the vicinity of the tool rotation axis *a*, and is thereby configured such that in the machining of a flat surface orthogonal to the tool rotation axis *a,* a machined surface having excellent glossiness and minimal gouging is obtained.

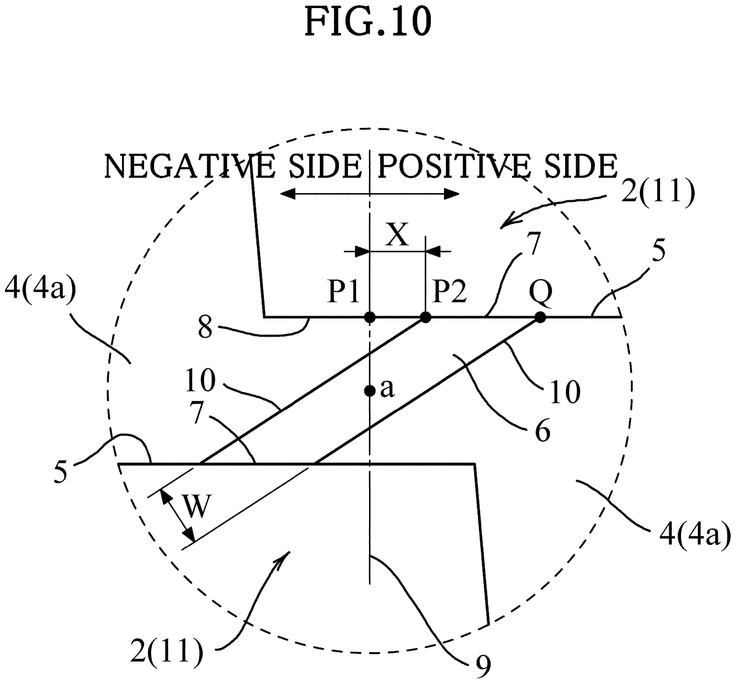

Specifically, in the present embodiment, the tip surface 6 is continuous with the tip-end flanks 4 (the first flanks 4a) as previously described. In addition, as shown in FIG. 10, the tip surface 6 is provided such that in a tool tip view, intersection points P2 (in a tool tip view, intersection points between ridgelines 10 on the sides further from the ball blades 5 among ridgelines 10 formed of the tip surface 6 and the tip-end flanks 4, and the edges of the tip ends of the swarf discharge grooves 2 having the ball blades 5 and the central cutting blades 7 continuous with the ball blades 5) are either located on negative sides or located on positive sides where a separation distance X between intersection points P1 (in a tool tip view, intersection points between the central cutting blades 7 or the extensions 8 of the central cutting blades 7, and a normal 9 to the central cutting blades 7 passing through the tool rotation axis a or of the extensions 8 of the central cutting blades 7) and the intersection points P2 in the directions along the central cutting blades 7 is 0-10% (inclusive) of a tool outer diameter, the positive sides being the ball-blade 5 sides with which the central cutting blades 7 are continuous the negative sides being the sides opposite thereto, with respect to a normal 9 to the central cutting blades 7 passing through the tool rotation axis a or to extensions 8 of the central cutting blades 7. The central cutting blades 7 are thereby provided up to the vicinity of the tool rotation axis *a.*

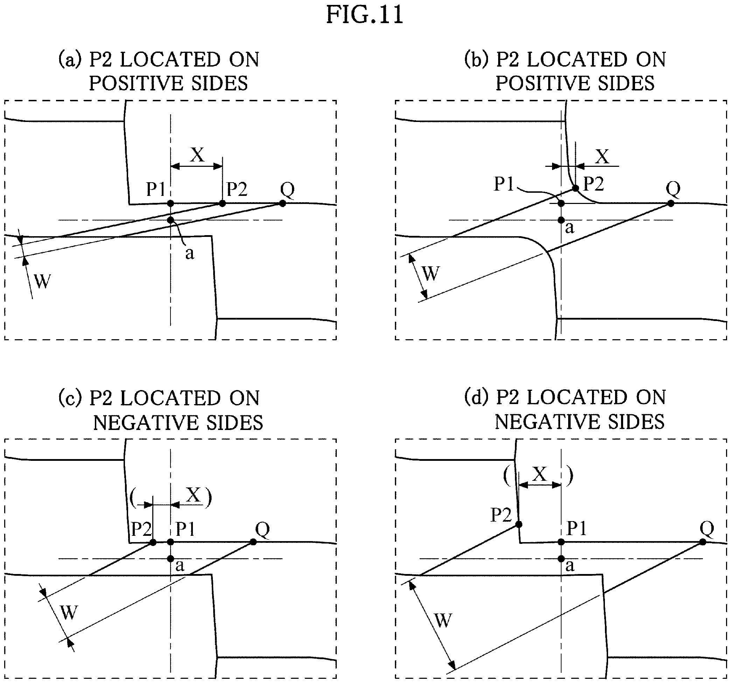

In the present embodiment, the central cutting blades 7 are formed linearly on the intersection ridgelines between the tip surface 6 and the rake faces 3 (gash faces 12) that face forward in the tool rotation direction, as shown in FIGS. 10 and 11. The central cutting blades 7 may be formed entirely linearly or partially linearly, e.g., the parts from intersection points Q between the central cutting blades 7 and the ball blades 5 continuous therewith (intersection points between ridgelines 10 near the ball blades 5 among the ridgelines 10 formed of the tip surface 6 and the tip-end flanks 4 (first flanks 4a), and the edges of the tip ends of the swarf discharge grooves 2 having the ball blades 5 and the central cutting blades 7 continuous with the ball blades 5) toward the tool interior (in the directions opposite of the ball blades 5, i.e., the negative sides) may be formed linearly. FIG. 11(b), described hereinafter, is one example of an aspect in which parts are linear in this manner. In this case, the separation distance X can be confirmed by ascertaining the linear portions to determine the extensions 8 of the central cutting blades 7 and the directions along the central cutting blades 7.

FIG. 11 includes images of cases in which the intersection points P2 are on the positive sides and cases in which said points are on the negative sides in a tool tip view in the present embodiment, in which the central cutting blades 7 are formed linearly. (a) and (b) are images of cases in which the intersection points P2 are on the positive sides, and (c) and (d) are images of cases in which the intersection points P2 are on the negative sides.

Specifically, FIGS. 11(a) and (b) are examples in which the intersection points P2 are at the edges of the tip ends of the swarf discharge grooves 2 having the central cutting blades 7, and are located on the positive-side edges of the tip ends of the wall surfaces (rake faces 3) that face forward in the tool rotation direction. FIG. 11(b) is an example in which the central cutting blades 7 are formed of linear portions facing toward the tool interior (in the directions opposite from the ball blades 5, i.e., to the negative sides) from the intersection points Q between the central cutting blades 7 and the ball blades 5 continuous therewith, and curved portions continuous with the edges of the walls surfaces that face rearward in the tool rotation direction, and the intersection points P2 are located in the curved portions.

In addition, FIG. 11(c) is an example in which the intersection points P2 are at the edges of the tip ends of the swarf discharge grooves 2 having the central cutting blades 7, and are located on the negative-side edges of the tip ends of the same faces as the wall surfaces (rake faces 3) that face forward in the tool rotation direction. FIG. 11(d) is an example in which the intersection points P2 are at the edges of the tip ends of the swarf discharge grooves 2 having the central cutting blades 7, and are located on the edges of the tip ends of the wall surfaces that face rearward in the tool rotation direction, located on the negative sides.

As previously described, the separation distance X in the present embodiment is one of the invention elements (indicators) used when the intersection points P2 are located on the positive sides, but in order to facilitate understanding of the details of Test Example 2 and Test Example 3 (described hereinafter), the portion corresponding to the separation distance X is shown in parentheses in FIGS. 11(c) and (d). In this case, X has a negative value.

Furthermore, the central cutting blades 7 may be formed in a curved shape instead of a linear shape. For example, as shown in FIGS. 10 and 11(a), when the intersection points P2 are located on the positive sides, these drawings show central cutting blades 7 formed into linear shapes and having end points at the intersection points Q and the intersection points P2, but the central cutting blades 7 may be formed into curved shapes that curve forward in the tool rotation direction or rearward in the tool rotation direction, or the central cutting blades 7 may be formed into wavy line shapes. In this case, the separation distance X can be confirmed by regarding virtual straight lines connecting the intersection points Q and the intersection points P2 as the central cutting blades 7 and determining the extensions 8 of the central cutting blades 7 and the directions along the central cutting blades 7.

Furthermore, in a tool tip view of the tip surface 6 of the present embodiment as shown in FIG. 10, the space between the two ridgelines 10, which are formed of the tip surface 6 and the tip-end flanks 4 (first flanks 4a) of the pair of ball blades 5 provided in 180 degree rotational symmetry with respect to the tool rotation axis a, is the width W of the tip surface 6, and the tip surface 6 of the present embodiment is formed such that the width W is 0.005 mm ≤ W ≤ 0.2D (D being the tool outer diameter).

Specifically, as a more desirable specification, the tip surface 6 of the present embodiment is configured such that when the tool outer diameter is greater than 1.5 mm, the width W is 0.01 mm ≤ W ≤ 0.3 mm, and when the tool outer diameter is 1.5 mm or less, the width W is 0.01 mm ≤ W ≤ 0.2D (D being the tool outer diameter).

The effects of the present embodiment configured as described above shall be described below.

In the present embodiment, the convex tip surface 6 intersecting the tool rotation axis a of the tool body 1 is provided at the tool tip. Therefore, there is no chisel edge having a large negative rake angle, and gouging due to the influence of the chisel edge is prevented as much as possible.

In addition, in the present embodiment, the intersection ridgelines of the tip surface 6 and the rake faces 3 are configured as central cutting blades 7 continuous with the ball blades 5. Therefore, the central cutting blades 7 have the same rake angle as the ball blades 5 and exhibit the same high cutting performance as the ball blades 5.

Moreover, because the tip surface 6 of the present embodiment is formed into a convex shape, in the machining of a flat surface orthogonal to the tool rotation axis a, even if the perpendicularity of the tool rotation axis a to the flat surface deviates (for example, even if the tool is bent due to cutting resistance and the tool rotation axis a becomes somewhat inclined relative to the flat surface), the tip surface 6 comes into contact with the flat surface and a burnishing effect due to the sliding contact action of the tip surface 6 on the cutting surface is achieved.

Thus, in the present embodiment, in the machining of a flat surface orthogonal to or intersecting the tool rotation axis a, because of the high cutting performance of the central cutting blades 7 and the burnishing effect due to the sliding contact action of the tip surface 6 on the cutting surface, cutting marks made during cutting by the central cutting blades 7 are minimized, and it is possible to obtain a machined surface having excellent glossiness equivalent to or better than that obtained by cutting with the ball blades 5.

In the present embodiment, the tip surface 6 is continuous with the tip-end flanks 4 (first flanks 4a). Furthermore, the tip surface 6 is provided such that in a tool tip view, intersection points P2 (in a tool tip view, intersection points between ridgelines 10 on the sides further from the ball blades 5 among ridgelines 10 formed of the tip surface 6 and the tip-end flanks 4 (first flanks 4a), and the edges of the tip ends of the swarf discharge grooves 2 having the ball blades 5 and the central cutting blades 7 continuous with the ball blades 5) are either located on negative sides or located on positive sides where a separation distance X between intersection points P1 (in a tool tip view, intersection points between the central cutting blades 7 or the extensions 8 of the central cutting blades 7, and a normal 9 to the central cutting blades 7 passing through the tool rotation axis a or of the extensions 8 of the central cutting blades 7) and the intersection points P2 in the directions along the central cutting blades 7 is 0-10% (inclusive) of a tool outer diameter, the positive sides being the ball-blade 5 sides with which the central cutting blades 7 are continuous and the negative sides being the sides opposite thereto, with respect to a normal 9 to the central cutting blades 7 passing through the tool rotation axis a or to extensions 8 of the central cutting blades 7, and the central cutting blades 7 are therefore provided up to the vicinity of the tool rotation axis *a.* As a result, in the machining of a flat surface orthogonal to or intersecting the tool rotation axis *a,* a machined surface having minimal gouging is obtained.

Furthermore, in the present embodiment, the tip surface 6 is formed such that the width W thereof is 0.005 mm ≤ W ≤ 0.2D (D being the tool outer diameter). Furthermore, as a more desirable specification, the tip surface 6 is configured such that when the tool outer diameter is greater than 1.5 mm, the width W is 0.01 mm ≤ W ≤ 0.3 mm, and when the tool outer diameter is 1.5 mm or less, the width W is 0.01 mm ≤ W ≤ 0.2D (D being the tool outer diameter). Therefore, any gouging and adhesion of swarf due to an increase in cutting resistance is minimized, the progress of wear of the tip surface 6 is minimized, and it is possible to obtain a machined surface having excellent glossiness equivalent to or better than that obtained when finishing with the ball blades 5.

Thus, the present embodiment is a ball end mill suitable for finishing, with which it is possible to obtain a high-gloss machined surface in the cutting of a flat surface orthogonal to a tool rotation axis a, such as the bottom surface of a die, using the tool tip, and with which it is possible to omit a polishing step or reduce the number of polishing man-hours.

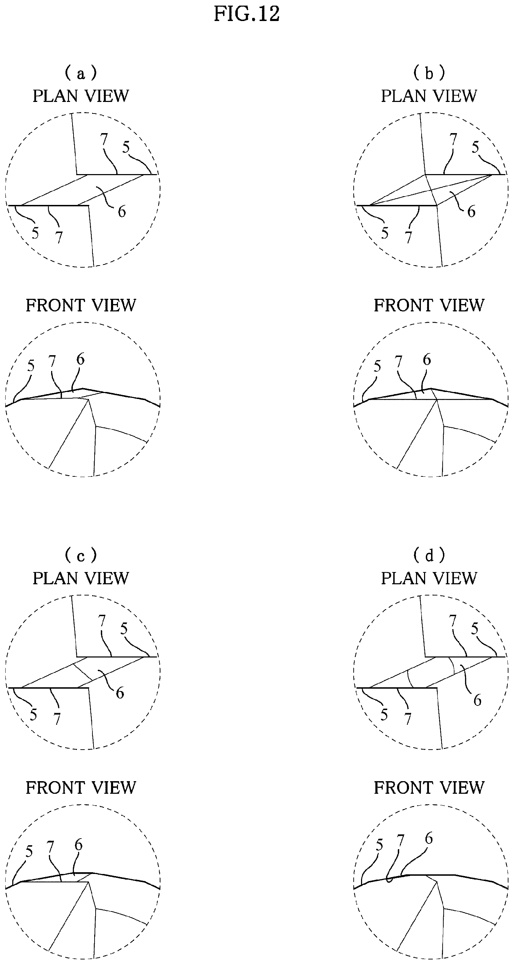

In the present embodiment, the tip surface 6 is configured as a cone as shown in FIG. 12(a), but in addition, the effects described above can also be obtained when employing a square pyramid shape as in FIG. 12(b), a gabled roof shape with two sides as in FIG. 12(c), and a truncated pyramid having a flat surface at the top of the convex surface as in FIG. 12(d).

The shape of the tip surface 6 shown in FIG. 12(d) (a truncated pyramid) is, specifically, an example of a truncated cone having a flat surface provided on the top of a conical convex surface such as is shown in FIG. 12(a), but despite not being depicted, may also be a truncated pyramid having a flat surface provided on the top of a convex surface of a square pyramid as shown in FIG. 12(b).

The convexity of the object realized in the present embodiment is minor; therefore, the apex of the conical shape in FIG. 12(a) may not be clearly visible in a tool tip view. Similarly, the intersection ridgelines of the tip surface 6 may not be clearly visible, such as those shown in the plan views (tool tip views) of FIGS. 12(b) to (d).

In each of FIGS. 12(a) to (d), the outer shape (profile) of the tip surface 6 is a peaked shape that assumes a convex form from the central cutting blades 7 side toward the tool center side (the tool rotation axis a side). Specifically, this shape is a triangular peaked shape in FIGS. 12(a) to (c) and a trapezoidal peaked shape in FIG. 12(d).

The effects described above are obtained even in cases in which, though not depicted, the shape of the tip surface 6 is a curved surface that assumes a convex form toward the tip side in the direction of the tool rotation axis a, or the flat surface at the top of a truncated cone such as is shown in FIG. 12(d) is replaced with a curved surface that assumes a convex form toward the tip side in the direction of the tool rotation axis *a.*

Test examples supporting the effects of the present embodiment shall next be described.

### <Test Example 1>

Test Example 1 was performed for confirming the state of the finished machined surface relative to the convexity of the tip surface 6. A plurality of samples were created, which had different convexities (maximum height of the profile shape of the tip surface 6) in the outer shape of the tip surface 6 connecting arbitrary points on the two central cutting blades 7 passing through the vicinity of the tool rotation axis *a,* and glossiness of the machined surface was evaluated for machined surfaces obtained when a workpiece was cut under the machining conditions listed below, using these samples.

Specifically, using cases in which the tool outer diameter was 6 mm, the shank diameter was 6 mm, and the effective length was 30 mm, and cases in which the tool outer diameter was 3 mm, the shank diameter was 6 mm, and the effective length was 12 mm, the glossiness was evaluated by visual observation (the appearance of a reflected image) of machined surfaces obtained when a flat surface orthogonal to the tool rotation axis *a* was machined using the tool tip portion when the tool outer diameter was 6 mm, and when the tool outer diameter was 3 mm, surface roughness was evaluated and the machined surface observed in addition to the visual appearance being observed in the same manner as when the tool outer diameter was 6 mm, the machining time being 20 minutes in each case.

Specifically, in the evaluation of outward appearance, on the back surface of a scale (metal scale), multiple clear O marks were repeatedly arranged in the longitudinal direction, the scale was set over each machined surface such that the surface on which these O marks were repeatedly arranged was perpendicular to the machined surface, and the appearance of the O marks (reflected image) reflected on the machined surface was comparatively evaluated.

In the evaluation of surface roughness, arithmetic mean roughness Ra was measured, and in the observational evaluation of the machined surface, the machined surface was enlarged and the appearance of cutting marks or gouging in the machined surface was observed.

In the creation of a plurality of samples having the desired convexity as shown in Table 1 below, for samples having a tool outer diameter of 6 mm, the width W of the tip surface 6 was set as appropriate within a range of 0.01 to 0.100 mm and the separation distance X was set as appropriate to a range of -0.038 to 0.055 mm, and for samples having a tool outer diameter of 3 mm, the width W of the tip surface 6 was set as appropriate to a range of 0.01 to 0.100 mm and the separation distance X was set as appropriate to a range of -0.029 to 0.028 mm.

### [Machining conditions when tool outer diameter was 6 mm]

Workpiece: pre-hardened steel (30 HRC)
Rotation speed: 13,000 min⁻¹
Feed rate: 1,500 mm/min
Depth of cut in axial direction: 0.05 mm
Depth of cut in radial direction: 0.1 mm
Coolant: water-soluble cutting fluid

### [Machining conditions when tool outer diameter was 3 mm]

Workpiece: pre-hardened steel (30 HRC)
Rotation speed: 19,000 min⁻¹
Feed rate: 950 mm/min
Depth of cut in axial direction: 0.05 mm
Depth of cut in radial direction: 0.05 mm
Coolant: water-soluble cutting fluid

### [Results]

Table 1 below shows the results of evaluating the glossiness of the samples having tool outer diameters of 6 mm and 3 mm.

Regarding the results of evaluating glossiness, excellent glossiness equivalent to or better than that of a machined surface finished with the ball blades 5 is indicated with ⊚, glossiness better than a machined surface finished with a conventional chisel edge is indicated with O, and glossiness equivalent to a machined surface finished with a conventional chisel edge is indicated with ×. In addition, the machined surfaces finished with the ball blades 5 were flat surfaces inclined 45° in relation to the tool rotation axis *a.*

**[Table 1]**

| | Convexity [*µ*m] | | | | | | |
|---|---|---|---|---|---|---|---|
| | 0.30 | 0.45 | 0.50 | 1.00 | 4.00 | 6.00 | 8.00 |
| 6mm | ⊚ | ⊚ | ⊚ | ⊚ | ⊚ | ○ | × |
| 3mm | ⊚ | ⊚ | ⊚ | ⊚ | ⊚ | ○ | × |

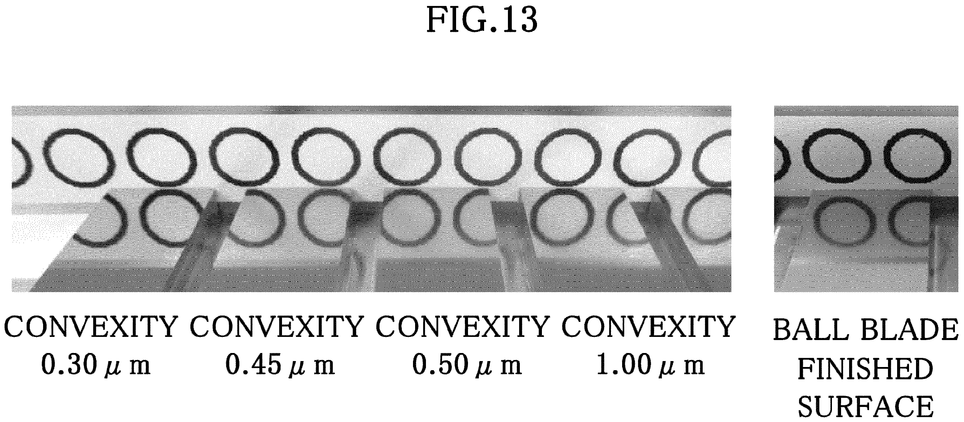

As shown in Table 1, in cases in which the tool outer diameter was 6 mm and cases in which the tool outer diameter was 3 mm, when the convexity was 6.00 *µ*m or less, it was confirmed that the glossiness was better than that of a machined surface finished with a conventional chisel edge. Particularly when the convexity was 4.00 *µ*m or less, it was confirmed that the glossiness was equivalent or superior to that of a machined surface finished with the ball blades 5, as shown in FIG. 13. FIG. 13 shows the results (convexity: 0.30 to 1.00 pm) of monitoring appearance (the appearance of a reflected image) when the tool outer diameter was 3 mm, but the same applies if the tool outer diameter is 6 mm.

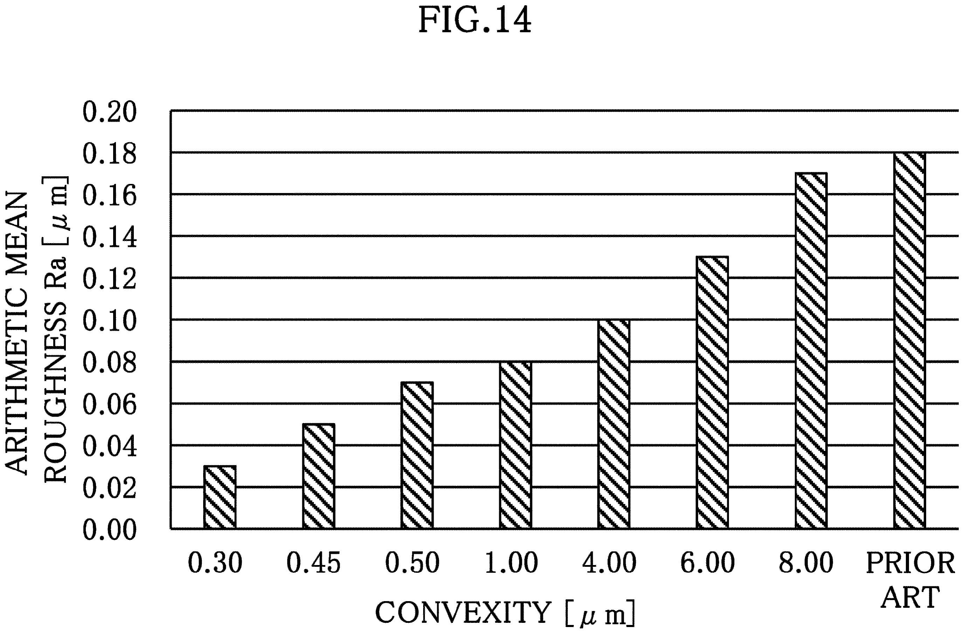

Table 2 below and FIG. 14 show the results of evaluating surface roughness (the results of measuring arithmetic mean roughness Ra) when the tool outer diameter was 3 mm.

**[Table 2]**

| | Convexity [*µ*m] | | | | | | | Prior art |
|---|---|---|---|---|---|---|---|---|
| | 0.30 | 0.45 | 0.50 | 1.00 | 4.00 | 6.00 | 8.00 | |
| Arithmetic mean roughness Ra [*µ*m] | 0.03 | 0.05 | 0.07 | 0.08 | 0.10 | 0.13 | 0.17 | 0.18 |

As shown in Table 2, it was confirmed that surface roughness (arithmetic mean roughness Ra) commensurately decreases as convexity decreases.

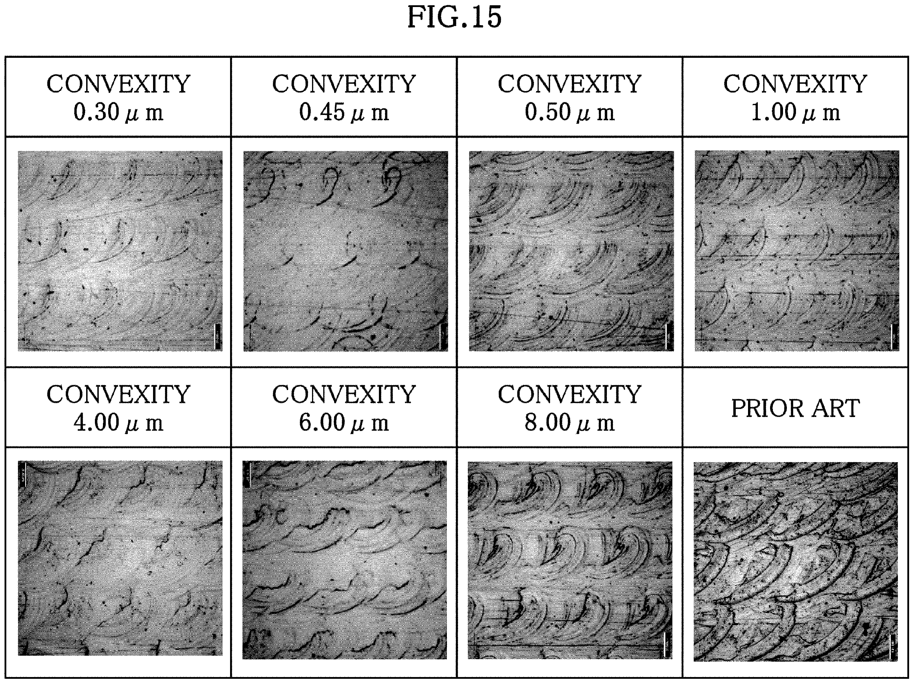

FIG. 15 shows the results of observing the machined surfaces when the tool outer diameter was 3 mm. In the observation of the machined surfaces, it was confirmed that as convexity decreases, the cutting marks or gouging in the machined surface commensurately decrease in size as shown in FIG. 15, and the results correspond to the results of evaluating surface roughness shown in Table 2 and FIG. 14.

As described above, according to Test Example 1, it was confirmed that a machined surface having favorable glossiness is obtained by configuring the tip surface 6 such that the convexity (maximum height of the profile shape of the tip surface 6) is 6.00 *µ*m or less in the outer shape of the tip surface 6 connecting arbitrary points on the two central cutting blades 7 passing through the vicinity of the tool rotation axis *a,* and preferably a machined surface having excellent glossiness equivalent to or better than a machined surface finished with the ball blades 5 is obtained with a convexity of 4.00 *µ*m or less in the tip surface 6.

### <Test Example 2>

Test Example 2 was performed for confirming the appropriate formation range of the tip surface 6 on the basis of the positions of the central cutting blades 7 formed by providing the tip surface 6. In a tool tip view such as is shown in FIG. 10, samples were created in which the positions of the central cutting blades 7 were changed by changing the separation distance X, in the directions along the central cutting blades 7, between the intersection points P1 between the central cutting blades 7 or the extensions 8 of the central cutting blades 7 and the normal 9 to the central cutting blades 7 passing through the tool rotation axis a or of the extensions 8 of the central cutting blades 7, and the intersection points P2 between the ridgelines 10 on the sides further from the ball blades 5 among the ridgelines 10 formed of the tip surface 6 and the tip-end flanks 4 (first flanks 4a) and the edges of the tip ends of the swarf discharge grooves 2 having the ball blades 5 and the central cutting blades 7 continuous with the ball blades 5. Glossiness was evaluated for machined surfaces obtained when a workpiece was cut under the machining conditions listed below, using these samples.

Specifically, using cases in which the tool outer diameter was 6 mm, the shank diameter was 6 mm, and the effective length was 30 mm, and cases in which the tool outer diameter was 3 mm, the shank diameter was 6 mm, and the effective length was 12 mm, the glossiness was evaluated by visual observation of machined surfaces obtained when a flat surface orthogonal to the tool rotation axis *a* was machined using the tool tip portion for machining times of both 20 minutes and 60 minutes.

Regarding the tool specifications, the convexity of the tip surface 6 of each sample was set to 0.30 pm, in view of the results of Test Example 1. The width W of the tip surface 6 (in FIG. 10, the space between the two ridgelines 10 formed by the tip surface 6 and the tip-end flanks 4 (first flanks 4a) of the pair of ball blades 5) was 0.02 mm when the tool outer diameter was 6 mm, and the width W of the tip surface 6 was 0.01 mm when the tool outer diameter was 3 mm. In terms of tool production, for a tool in which a diameter ratio X/D of the separation distance X to the tool outer diameter (D: tool outer diameter, hereinafter referred to simply as the "diameter ratio X/D") was 0, i.e., the separation distance X was 0.00, the width W was 0.1 mm when the tool outer diameter was 6 mm and the width W was 0.05 mm when the tool outer diameter was 3 mm, and for a tool in which the diameter ratio X/D was -0.01, the width W was 0.2 mm when the tool outer diameter was 6 mm and the width W was 0.1 mm when the tool outer diameter was 3 mm.

### [Machining conditions when tool outer diameter was 6 mm]

Workpiece: pre-hardened steel (30 HRC)
Rotation speed: 13,000 min⁻¹
Feed rate: 1,500 mm/min
Depth of cut in axial direction: 0.05 mm
Depth of cut in radial direction: 0.1 mm
Coolant: water-soluble cutting fluid

### [Machining conditions when tool outer diameter was 3 mm]

Workpiece: pre-hardened steel (30 HRC)
Rotation speed: 19,000 min⁻¹
Feed rate: 950 mm/min
Depth of cut in axial direction: 0.05 mm
Depth of cut in radial direction: 0.05 mm
Coolant: water-soluble cutting fluid

### [Results]

Table 3 below shows the specifications (separation distance X, diameter ratio X/D) and results of evaluating glossiness of the samples when the tool outer diameter was 6 mm, and Table 4 below shows the specifications (separation distance X, diameter ratio X/D) and results of evaluating glossiness of the samples when the tool outer diameter was 3 mm.

Regarding the separation distance X in Tables 3 and 4 below, negative signs are used to represent cases in which the intersection points P2 are located on the negative sides of the normal 9 to the central cutting blades 7 passing through the tool rotation axis a or of the extensions 8 of the central cutting blades 7. In addition, the separation distance X when the intersection points P1 are the same as the intersection points P2 is represented as 0.00.

Regarding the results of evaluating glossiness, excellent glossiness equivalent to or better than that of a machined surface finished with the ball blades 5 is indicated with ⊚, glossiness better than a machined surface finished with a conventional chisel edge is indicated with O, and glossiness equivalent to a machined surface finished with a conventional chisel edge is indicated with ×. In the present Test Example, the machined surfaces finished with the ball blades 5 were flat surfaces inclined 45° in relation to the tool rotation axis *a.*

**[Table 3]**

| X (mm) | Diameter Ratio (X/D) | Glossiness | |
|---|---|---|---|
| | | 20 min | 60 min |
| -0.06 | -0.01 | ⊚ | ⊚ |
| 0.00 | 0.00 | ⊚ | ⊚ |
| 0.12 | 0.02 | ⊚ | ⊚ |
| 0.24 | 0.04 | ⊚ | ⊚ |
| 0.36 | 0.06 | ⊚ | ⊚ |
| 0.48 | 0.08 | ⊚ | ⊚ |
| 0.60 | 0.10 | ○ | ○ |
| 0.72 | 0.12 | × | × |
| 0.84 | 0.14 | × | × |

**[Table 4]**

| X (mm) | Diameter Ratio (X/D) | Glossiness | |
|---|---|---|---|
| | | 20 min | 60 min |
| -0.03 | -0.01 | ⊚ | ⊚ |
| 0.00 | 0.00 | ⊚ | ⊚ |
| 0.06 | 0.02 | ⊚ | ⊚ |
| 0.12 | 0.04 | ⊚ | ⊚ |
| 0.18 | 0.06 | ⊚ | ⊚ |
| 0.24 | 0.08 | ⊚ | ⊚ |
| 0.30 | 0.10 | ○ | ○ |
| 0.36 | 0.12 | × | × |
| 0.42 | 0.14 | × | × |

As shown in Tables 3 and 4, in both cases in which the tool outer diameter was 6 mm and cases in which the tool outer diameter was 3 mm, regarding the specification in which the diameter ratio X/D is greater than 0.1, i.e., the specification of the separation distance X is a value greater than 10% of the tool outer diameter, it was confirmed that the glossiness was equivalent to that obtained when finishing with a conventional chisel edge, whether the machining time was 20 minutes or 60 minutes. Supposedly the reason for this is that, due to the separation distance X being a value greater than 10% of the tool outer diameter, the high-cutting-performance central cutting blades 7 are located at positions separated from the tool rotation axis a, the ridgelines 10 of the tip surface 6 and the tip-end flanks 4 (first flanks 4a) act as cutting blades having large negative rake angles in areas nearer to the tool rotation axis a, causing gouging in the machined surface, and an adequate burnishing effect could not be achieved even with the subsequent sliding contact action of the tip surface 6 on the cut surface.

In addition, regarding the specification in which the diameter ratio X/D is 0.1 or less, i.e., the specification in which the separation distance X is 10% or less of the tool outer diameter, it was confirmed that the glossiness was better than that of a machined surface finished with a conventional chisel edge, whether the machining time was 20 minutes or 60 minutes. In particular, regarding the specification in which the diameter ratio X/D is 0.08 or less, i.e., the specification in which the separation distance X is 8% or less of the tool outer diameter, it was confirmed that excellent glossiness equivalent to or better than that of a machined surface finished with the ball blades 5 is obtained.

As described above, according to Test Example 2, it was confirmed that a high-gloss machined surface is obtained by providing the tip surface 6 such that the central cutting blades 7 are near to the tool rotation axis *a.*

Specifically, it was confirmed that a high-gloss machined surface is obtained by providing the tip surface 6 such that in a tool tip view, the intersection points P2 are located on negative sides or on positive sides where the separation distance X of the intersection points P1 and the intersection points P2 in the directions along the central cutting blades 7 is 0% or more and 10% or less (0.1D or less (D: tool outer diameter)), and preferably 0% or more and 8% or less (0.08D or less (D: tool outer diameter)), of the tool outer diameter, the positive sides being the sides with the ball blades 5 with which the central cutting blades 7 are continuous and the negative sides being the opposite sides, with respect to the normal 9 to the central cutting blades 7 passing through the tool rotation axis a or of the extensions 8 of the central cutting blades 7.

### <Test Example 3>

Test Example 3 was performed for confirming the appropriate formation range of the tip surface 6 on the basis of the width W of the tip surface 6. In a tool tip view such as is shown in FIG. 10, the distance between two ridgelines 10 formed of the tip surface 6 and the tip-end flanks 4 (first flanks 4a) of the pair of ball blades 5 was the width W of the tip surface 6, samples were created in which the width W of the tip surface 6 was changed, and glossiness was evaluated for machined surfaces obtained when a workpiece was cut under the machining conditions listed below, using these samples.

Specifically, using cases in which the tool outer diameter was 6 mm, the shank diameter was 6 mm, and the effective length was 30 mm, cases in which the tool outer diameter was 3 mm, the shank diameter was 6 mm, and the effective length was 12 mm, and cases in which the tool outer diameter was 1.5 mm, the shank diameter was 4 mm, and the effective length was 6 mm, the glossiness was evaluated by visual observation of machined surfaces obtained when a flat surface orthogonal to the tool rotation axis *a* was machined using the tool tip for machining times of both 20 minutes and 60 minutes.

Regarding the tool specifications, the convexity of the tip surface 6 in each sample was 0.30 *µ*m, as in Test Example 2. The separation distance X was set to an appropriate value with each sample, as shown in Tables 5 to 7 below.

### [Machining conditions when tool outer diameter was 6 mm]

Workpiece: pre-hardened steel (30 HRC)
Rotation speed: 13,000 min⁻¹
Feed rate: 1,500 mm/min
Depth of cut in axial direction: 0.05 mm
Depth of cut in radial direction: 0.1 mm
Coolant: water-soluble cutting fluid

### [Machining conditions when tool outer diameter was 3 mm]

Workpiece: pre-hardened steel (30 HRC)
Rotation speed: 19,000 min⁻¹
Feed rate: 950 mm/min
Depth of cut in axial direction: 0.05 mm
Depth of cut in radial direction: 0.05 mm
Coolant: water-soluble cutting fluid

### [Machining conditions when tool outer diameter was 1.5 mm]

Workpiece: pre-hardened steel (30 HRC)
Rotation speed: 20,000 min⁻¹
Feed rate: 400 mm/min
Depth of cut in axial direction: 0.015 mm
Depth of cut in radial direction: 0.03 mm
Coolant: water-soluble cutting fluid

### [Results]

Table 5 below shows the specifications (width W of tip surface 6, diameter ratio W/D of the width W of the tip surface 6 to the tool outer diameter (D: tool outer diameter, referred to below simply as "diameter ratio W/D"), separation distance X) and the results of evaluating glossiness of the samples when the tool outer diameter was 6 mm. Table 6 below shows the specifications (width W of tip surface 6, diameter ratio W/D, separation distance X) and results of evaluating glossiness of the samples when the tool outer diameter was 3 mm, and Table 7 below shows the specifications (width W of tip surface 6, diameter ratio W/D, separation distance X) and results of evaluating glossiness of the samples when the tool outer diameter was 1.5 mm.

Regarding the separation distance X in Tables 5 to 7 below, negative signs are used to represent cases in which the intersection points P2 are located on the negative sides of the normal 9 to the central cutting blades 7 passing through the tool rotation axis a or of the extensions 8 of the central cutting blades 7. In addition, regarding the results of evaluating glossiness, excellent glossiness equivalent to or better than that of a machined surface finished with the ball blades 5 is indicated with ⊚, glossiness better than a machined surface finished with a conventional chisel edge is indicated with O, and glossiness equivalent to a machined surface finished with a conventional chisel edge is indicated with ×. In the present Text Example 4, the machined surfaces finished using the ball blades 5 were flat surfaces inclined 45° in relation to the tool rotation axis *a.*

**[Table 5]**

| W (mm) | Diameter ratio (W/D) | X (mm) | Glossiness | |
|---|---|---|---|---|
| | | | 20 min | 60 min |
| 0.002 | 0.0003 | 0.064 | × | × |
| 0.005 | 0.001 | 0.061 | ○ | ○ |
| 0.010 | 0.002 | 0.055 | ⊚ | ⊚ |
| 0.050 | 0.008 | 0.006 | ⊚ | ⊚ |
| 0.100 | 0.017 | -0.038 | ⊚ | ⊚ |
| 0.150 | 0.025 | -0.041 | ⊚ | ⊚ |
| 0.200 | 0.033 | -0.044 | ⊚ | ⊚ |
| 0.300 | 0.050 | -0.047 | ⊚ | ⊚ |
| 0.600 | 0.100 | -0.056 | ⊚ | ○ |
| 0.900 | 0.150 | -0.065 | ⊚ | ○ |
| 1.200 | 0.200 | -0.074 | ⊚ | ○ |
| 1.500 | 0.250 | -0.081 | ○ | × |

**[Table 6]**

| W (mm) | Diameter ratio (W/D) | X (mm) | Glossiness | |
|---|---|---|---|---|
| | | | 20 min | 60 min |
| 0.002 | 0.001 | 0.040 | × | × |
| 0.005 | 0.002 | 0.036 | ○ | ○ |
| 0.010 | 0.003 | 0.028 | ⊚ | ⊚ |
| 0.050 | 0.017 | -0.025 | ⊚ | ⊚ |
| 0.100 | 0.033 | -0.029 | ⊚ | ⊚ |
| 0.150 | 0.050 | -0.031 | ⊚ | ⊚ |
| 0.200 | 0.067 | -0.033 | ○ | ⊚ |
| 0.300 | 0.100 | -0.037 | ⊚ | ⊚ |
| 0.400 | 0.133 | -0.041 | ⊚ | ○ |
| 0.500 | 0.167 | -0.045 | ⊚ | ○ |
| 0.600 | 0.200 | -0.049 | ⊚ | ○ |
| 0.700 | 0.233 | -0.053 | ○ | × |

**[Table 7]**

| W (mm) | Diameter ratio (W/D) | X (mm) | Glossiness | |
|---|---|---|---|---|
| | | | 20 min | 60 min |
| 0.002 | 0.001 | 0.024 | × | × |
| 0.005 | 0.003 | 0.020 | ○ | ○ |
| 0.010 | 0.007 | 0.013 | ⊚ | ⊚ |
| 0.050 | 0.033 | -0.012 | ⊚ | ⊚ |
| 0.100 | 0.067 | -0.014 | ⊚ | ⊚ |
| 0.150 | 0.100 | -0.015 | ⊚ | ⊚ |
| 0.200 | 0.133 | -0.017 | ⊚ | ⊚ |
| 0.250 | 0.167 | -0.019 | ⊚ | ⊚ |
| 0.300 | 0.200 | -0.020 | ⊚ | ⊚ |
| 0.350 | 0.233 | -0.010 | ○ | × |

As shown in Tables 5 to 7, in cases in which the tool outer diameter was 6 mm, cases in which the tool outer diameter was 3 mm, and cases in which the tool outer diameter was 1.5 mm, with the specification in which the width W of the tip surface 6 is 0.002 mm, it was confirmed that whether the machining time is 20 minutes or 60 minutes, gouging occurs and the same glossiness is obtained as that of a machined surface finished with a conventional chisel edge, but with the specification in which the width W of the tip surface 6 is 0.005 mm, it was confirmed that the glossiness obtained is more favorable than that of a machined surface finished with a conventional chisel edge. Supposedly, the reason for this is that when the width W of the tip surface 6 is less than 0.005 mm, there is less of a burnishing effect due to the sliding contact action of the tip surface 6.

In addition, as shown in Tables 5 and 6, in cases in which the tool outer diameter was 6 mm and cases in which the tool outer diameter was 3 mm, with the specification in which the width W of the tip surface 6 is 0.01 mm or more and the diameter ratio W/D is 0.2 or less (i.e., the width W of the tip surface 6 is 20% or less of the tool outer diameter), it was confirmed that the glossiness obtained is more favorable than that of a machined surface finished with a conventional chisel edge. In particular, with the specification of the width W described above in the initial period of machining (a machining time of 20 minutes) and also the specification in which the machining time is 60 minutes and the width W of the tip surface 6 is 0.01-0.3 mm (inclusive), it was confirmed that excellent glossiness is obtained which is equivalent to or better than that of a machined surface finished with the ball blades 5.

In addition, as shown in Table 7, in cases in which the tool outer diameter was 1.5 mm, with the specification in which the width W of the tip surface 6 is 0.01 mm or more and the diameter ratio W/D is 0.2 or less (i.e., the width W of the tip surface 6 is 20% or less of the tool outer diameter and the width W of the tip surface 6 is therefore 0.3 mm or less), it was confirmed that whether the machining time is 20 minutes or 60 minutes, excellent glossiness is obtained which is equivalent to or better than that of a machined surface finished with the ball blades 5.

In addition, even in cases in which the tool outer diameter was 6 mm, cases in which the tool outer diameter was 3 mm, and cases in which the tool outer diameter was 1.5 mm, with the specification in which the diameter ratio W/D is greater than 0.2, i.e., the specification in which the width W of the tip surface 6 is a value greater than 20% of the tool outer diameter, it was confirmed that the glossiness obtained is more favorable than that of a machined surface finished with a conventional chisel edge in the initial period of machining (a machining time of 20 minutes), but it was confirmed that with a machining time of 60 minutes, glossiness decreases and the glossiness obtained is equivalent to that of a machined surface finished with a conventional chisel edge. Supposedly the reason for this is that due to the width W of the tip surface 6 being a value greater than 20% of the tool outer diameter, cutting resistance increased, gouging occurred after the initial period of machining, giving rise to swarf adhesion, and an adequate burnishing effect could not be achieved even with the subsequent sliding contact action of the tip surface 6 on the cut surface.

As described above, according to Test Example 3, it was confirmed that a high-gloss machined surface is obtained by forming a tip surface 6 such that the width W of the tip surface 6 is 0.005 mm ≤ W ≤ 0.2D (D: tool outer diameter).

Furthermore, it was confirmed that a higher-gloss machined surface is obtained, preferably, by forming the tip surface 6 such that the width W of the tip surface 6 is 0.01 mm ≤ W ≤ 0.3 mm when the tool outer diameter is greater than 1.5 mm, and forming the tip surface 6 such that the width W of the tip surface 6 is 0.01 mm ≤ W ≤ 0.2D (D: tool outer diameter) when the tool outer diameter is 1.5 mm or less.

Though not shown in Tables 5 to 7, in the process of carrying out Test Example 3 described above, even with specifications in which the width W of the tip surface 6 is confirmed to yield excellent glossiness (⊚ rating) equivalent to or better than that of a machined surface finished with the ball blades 5 described above, it was confirmed that excellent glossiness (⊚ rating) equivalent to or better than that of a machined surface finished with the ball blades 5 is not necessarily obtained due to the diameter of a circle constituting the rotation locus of the tip surface 6 being a value greater than 35% of the tool outer diameter in a tool tip view, and there are also cases in which the glossiness obtained was better (O rating) than that of a machined surface finished with a conventional chisel edge.

Supposedly, the reason for this is that due to the diameter of a circle constituting the rotation locus of the tip surface 6 being a value greater than 35% of the tool outer diameter, cutting resistance increased and a favorable cut surface could not be obtained. Therefore, it was not possible to achieve an adequate burnishing effect that would yield a high-gloss machined surface, even with the subsequent sliding contact action of the tip surface 6 on the cut surface.

As described above, it is preferable to form the tip surface 6 such that in a tool tip view, the diameter of a circle constituting the rotation locus of the tip surface 6 is 35% or less of the tool outer diameter, i.e., the maximum distance between the tool rotation axis a and the outer edge of the tip surface 6, which would be the radius of the largest possible circle constituting the rotation locus of the tip surface 6, is 17.5% or less of the tool outer diameter.

### <Test Example 4>

Test Example 4 is a comparative evaluation between the present embodiment and the prior art (a tip-shaped ball end mill having a chisel edge at the tool tip), and in the present embodiment, the convexity of the tip surface 6 was 1.00 pm, the width W of the tip surface 6 was 0.025 mm, and the separation distance X was 0.005 mm. The only difference between the present embodiment and the prior art is whether the tool tip has a tip surface 6 or a chisel edge; that is, the ball blades 5 and other components have the same specifications. Machined surfaces were obtained by cutting a workpiece under the conditions listed below, using the present embodiment having this specification and the prior art, and the glossiness and surface roughness of these machined surfaces were evaluated.

Specifically, the tool specifications of both the present embodiment and the prior art were that the tool outer diameter was 3 mm, the shank diameter was 6 mm, and the effective length was 12 mm, machined surfaces were obtained by cutting a flat surface orthogonal to the tool rotation axis a (referred to below as a "0° surface") with the tool tip or with a flat surface inclined 45° relative to the tool rotation axis a (referred to below as a "45° surface") with the ball blades 5 for 20 minutes in some cases and for 60 minutes in others, and the glossiness of these machined surfaces was evaluated by visual observation (the appearance of the reflected image), and the surface roughness was evaluated by measuring arithmetic mean roughness Ra.

### [Milling parameters]

Workpiece: pre-hardened steel (30 HRC)
Rotation speed: 19,000 min⁻¹
Feed rate: 950 mm/min
Depth of cut in axial direction: 0.05 mm
Depth of cut in radial direction: 0.05 mm
Coolant: water-soluble cutting fluid

### [Results]

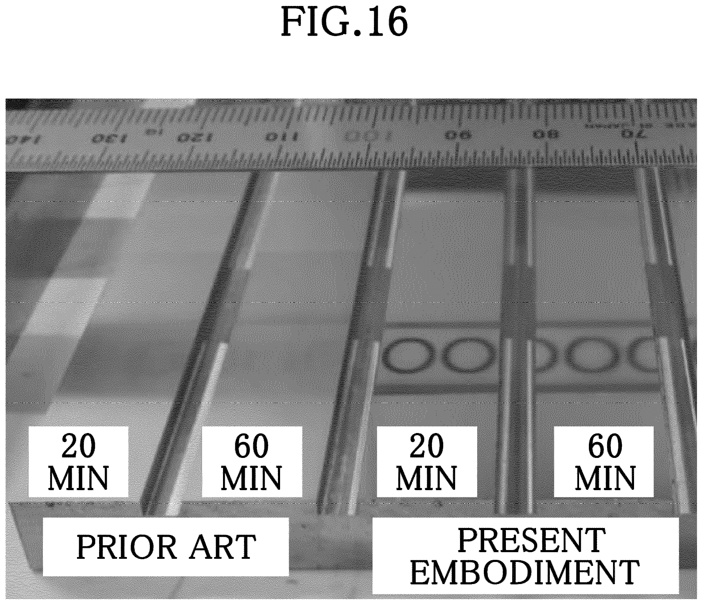

FIG. 16 shows the results of evaluating glossiness of the 0° surfaces for both the present embodiment and the prior art. Specifically, on the back surface of a scale (metal scale) in the upper part of the image, multiple clear O marks were repeatedly arranged in the longitudinal direction of the scale (metal scale), the surface on which these O marks were repeatedly arranged was held over each machined surface (0° surface), and the appearance of the O marks reflected on the machined surface (0° surface) was comparatively evaluated. As shown in FIG. 16, regarding the 0° surface, the present embodiment produced a machined surface having excellent glossiness such that a clear reflected image (O marks) was visually confirmed whether the machining time was 20 minutes or 60 minutes, whereas the prior art produced a non-glossy machined surface in which a reflected image (O marks) could not be confirmed.

Regarding the 45° surface (the machined surface cut with the ball blades 5), as a result of comparing the present embodiment and the prior art with a machining time of 20 minutes, no difference was found between the two because the specifications of the ball blade 5 were the same, and although not shown, it was confirmed that in both cases, it is possible to obtain a machined surface having excellent glossiness such that a clear reflected image is visually confirmed.

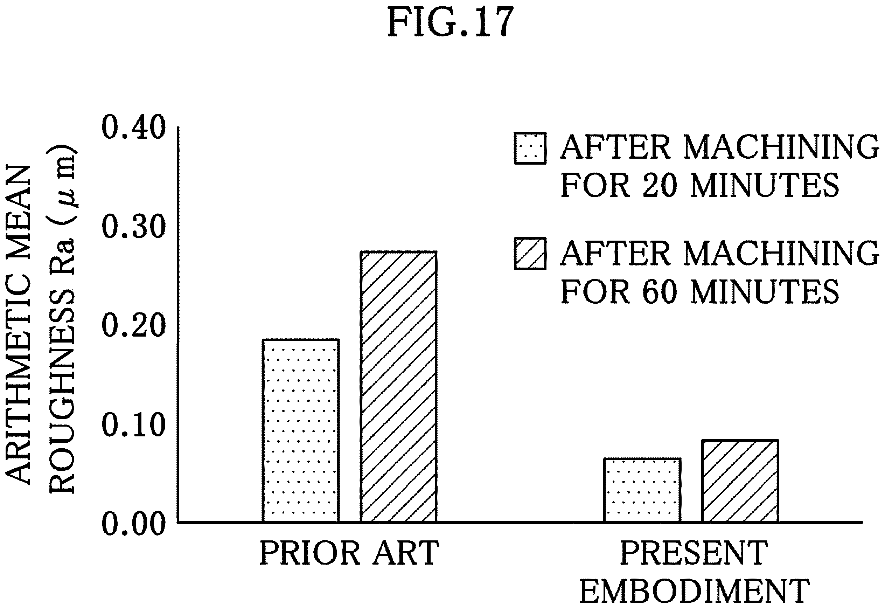

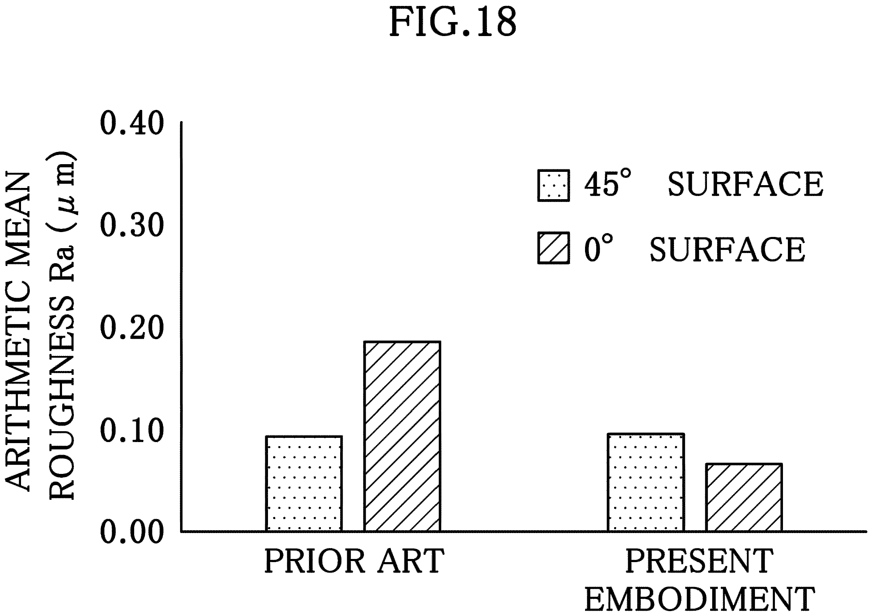

FIG. 17 is a graph of the results of measuring the arithmetic mean roughness Ra of the 0° surfaces of the present embodiment and the prior art machined for 20 minutes and 60 minutes, and FIG. 18 is a graph of the results of measuring the arithmetic mean roughness Ra of the 45° surfaces of the present embodiment and the prior art machined for 20 minutes.

It was confirmed that in the present embodiment, the values of the arithmetic mean roughness Ra of the machined surfaces are less than with the prior art, as shown in FIG. 17.

As shown in FIG. 18, a 0° surface machined using a chisel edge at the tool tip will generally have greater surface roughness than a 45° surface machined using ball blades as is the case with the prior art. However, in the present embodiment, it was confirmed that the 45° surface and the 0° surface both have favorable surface roughness and a 0° surface machined using a tool tip having the tip surface 6 has better surface roughness than a 45° surface machined using the ball blades 5, as shown in FIG. 18.

As described above, from Test Example 4, it was confirmed that in the present embodiment, due to the tip surface 6 being provided at a tool tip portion such that the central cutting blades 7 are provided near the tool rotation axis a, the resulting machined surface has excellent glossiness equivalent to or better than that of a surface machined using the ball blades 5, even in the machining of a flat surface orthogonal to the tool rotation axis a using the tool tip.

The present invention is not limited to the present embodiment; the specific configuration of configurational requirements for the present invention can be designed as appropriate.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A ball end mill in which a plurality of swarf discharge grooves opened at a tip end and leading from a tool-tip-end side to a tool-base-end side are formed in an outer periphery of a tool body, and ball blades are provided at intersection ridgelines between rake faces of the swarf discharge grooves and tip-end flanks of the tool body, the ball end mill being **characterized in that** a convex tip surface intersecting a tool rotation axis of the tool body is provided at a tool tip portion, and intersection ridgelines between the tip surface and the rake faces are configured as central cutting blades continuous with the ball blades.

2. The ball end mill according to claim 1, **characterized in that** the tip surface is provided so as to be continuous with the tip-end flanks of the pair of ball blades, which are provided in 180 degree rotational symmetry with respect to the tool rotation axis, and the rake faces of the tip-end flanks, between the tip-end flanks.

3. The ball end mill according to claim 2, **characterized in that** the tip surface includes the tool rotation axis, and in a tool tip view, the tip surface is configured so as to have a peaked profile that linearly connects an arbitrary point on one central cutting blade continuous with one of the ball blades passing through the vicinity of the tool rotation axis, and an arbitrary point on the other central cutting blade continuous with the other ball blade.

4. The ball end mill according to claim 3, **characterized in that**: the tip surface includes the tool rotation axis; in a tool tip view, the tip surface is configured so as to have a peaked profile that linearly connects an intersection point between one central cutting blade continuous with one of the ball blades and one ridgeline formed of the tip surface and one tip-end flank, and an intersection point between the other central cutting blade continuous with the other ball blade and the other ridgeline formed of the tip surface and the other tip-end flank; and the maximum height of the peaked shape is 6 *µ*m or less.

5. The ball end mill according to any one of claims 1-4, **characterized in that** the central cutting blades are provided up to the vicinity of the tool rotation axis.

6. The ball end mill according to any one of claims 1-5, **characterized in that** the tip surface is continuous with the tip-end flanks, and the tip surface is provided such that in a tool tip view, intersection points P2 described in (2) below are either located on negative sides or located on positive sides where a separation distance in a direction between intersection points P1 described in (1) below and intersection points P2 along the central cutting blades is 0-10% (inclusive) of a tool outer diameter, the positive sides being the ball-blade sides with which the central cutting blades are continuous and the negative sides being the sides opposite thereto, with respect to a normal to the central cutting blades passing through the tool rotation axis or to extensions of the central cutting blades.
(1) Intersection points P1: in a tool tip view, intersection points between central cutting blades or extensions of the central cutting blades, and a normal to the central cutting blades passing through the tool rotation axis or to the extensions of the central cutting blades
(2) Intersection points P2: in a tool tip view, intersection points between ridgelines on the sides further from the ball blades among ridgelines formed of the tip surface and the tip-end flanks, and the edges of the tip ends of the swarf discharge grooves having the ball blades and the central cutting blades continuous with the ball blades

7. The ball end mill according to any one of claims 1-6, **characterized in that** in a tool tip view of the tip surface, a width W of the tip surface is 0.005 mm ≤ W ≤ 0.2D, wherein D is a tool outer diameter, the width W of the tip surface being a space between two ridgelines formed of the tip surface and the tip-end flanks of the pair of ball blades provided in 180 degree rotational symmetry with respect to the tool rotation axis.

8. The ball end mill according to claim 7, **characterized in that** the width W of the tip surface is set to the following ranges.
0.01 mm ≤ W ≤ 0.3 mm when tool outer diameter D > 1.5 mm
0.01 mm ≤ W ≤ 0.2D when tool outer diameter D ≤ 1.5 mm
